# EUROPEAN PATENT SPECIFICATION

(11) **EP 3 705 517 B1**
(45) Date of publication and mention of the grant of the patent: **10.05.2023**
(21) Application number: 18873631.8
(22) Date of filing: 31.10.2018
(51) Int. Cl.: C08L 7/00, B60C 1/00, C08L 21/00, C08L 25/16, C08L 101/00

(54) **RUBBER COMPOSITION AND TIRE**
KAUTSCHUKZUSAMMENSETZUNG UND REIFEN
COMPOSITION DE CAOUTCHOUC, ET PNEUMATIQUE

(30) Priority: 31.10.2017 JP 2017210389
(43) Date of publication of application: 09.09.2020
(73) Proprietor: Bridgestone Corporation, Tokyo 104-8340 (JP)
(72) Inventor: TAHARA, Seiichi, Tokyo 104-8340 (JP)
(74) Representative: Marks & Clerk LLP
(86) International application number: PCT/JP2018/040618
(87) International publication number: WO 2019/088210

(56) References cited:
- WO-A1-2012/069585
- WO-A1-2017/060633
- WO-A1-2017/104423
- JP-A- H08 188 012
- JP-A- H09 324 077
- JP-A- H10 195 242
- JP-A- 2002 220 491
- JP-A- 2003 292 675
- JP-A- 2011 184 546
- JP-A- 2012 092 176
- JP-A- 2015 528 844
- JP-A- 2016 216 578
- JP-A- 2017 043 712
- US-A1- 2005 148 713
- US-B1- 7 259 205

## Description

### TECHNICAL FIELD

The present disclosure relates to a rubber composition and a tire.

### BACKGROUND

Conventionally, various studies have been made for improving braking performance on a dry road surface (hereinafter abbreviated as "dry performance") and braking performance on a wet road surface (hereinafter abbreviated as "wet performance") from the viewpoint of improving safety of vehicles. For example, PTL 1 provided below discloses that braking performance of a tire against both of a dry road surface and a wet road surface is improved by applying a rubber composition obtained by blending a thermoplastic resin and a filler including silica to a rubber component including 70% by mass or more of natural rubber to tread rubber of the tire. In addition, PTL 2 provided below discloses that wet gripping performance is improved by applying a rubber composition which includes a rubber component including a modified styrene-butadiene copolymer having a glass transition temperature (Tg) of -50°C or less, a thermoplastic resin, and a filler to a tread rubber of a tire.

On the other hand, a request for improving low fuel efficiency of automobiles is growing in relation to a worldwide move to regulate emissions of carbon dioxide associated with a recent growing interest in environmental problems. In order to respond to such a request, reduction of rolling resistance is required for tire performance. In this regard, by using a rubber composition with a low loss tangent (tan δ) (hereinafter referred to as "excellent in the low loss property") for tread rubber, heat generation of a tire is suppressed to reduce rolling resistance, and fuel efficiency of a tire can be improved consequently. For example, PTL 3 provided below discloses that a low loss property and wear resistance can be achieved at the same time by applying a rubber composition which includes a rubber component including polymer components P1 and P2 with glass transition temperatures (Tg) in a particular relation and a filler including silica, in which the polymer components P1 and P2 are incompatible with each other in terms of a submicron order, and in which 80% or more of an entire amount of the filler exists in a phase of the polymer component P2 to a tread rubber of a tire.

Reference is also made to JP 2015-528844, which discloses a tire comprising at least one rubber composition based on at least one blend of natural rubber, NR, or synthetic polyisoprene, and a styrene-butadiene copolymer, SBR, the SBR having a content of greater than or equal to 20 parts per hundred parts of elastomer, phr, and a reinforcing filler comprising carbon black, characterized in that the composition comprises a plasticizing resin having a glass transition temperature, Tg, greater than or equal to 20°C and that the SBR has a Tg greater than or equal to -65°C.

### CITATION LIST

### Patent Literature

PTL 1: International Publication No. WO2015/079703
PTL 2: International Publication No. WO2017/077714
PTL 3: International Publication No. WO2017/077712

### SUMMARY

### (Technical Problem)

However, the inventor of the present disclosure has studied to find that it is difficult to achieve both dry performance and wet performance at the same time without deteriorating the low loss property of a tire in the techniques disclosed in PLTs 1 to 3 described above.

Then, an object of the present disclosure is to solve the above-described problem of the conventional techniques and to provide a rubber composition capable of achieving both dry performance and wet performance at the same time without deteriorating the low loss property of a tire.

In addition, a further object of the present disclosure is to provide a tire in which both dry performance and wet performance are achieved at the same time while having a good low loss property.

### (Solution to Problem)

Outlined configurations of the present disclosure to solve the above problem are as follows.

A rubber composition of the present disclosure includes: a rubber component (A) including a natural rubber (A1), a synthetic rubber (A2) having a glass transition temperature (Tg) of -50°C or less, and a synthetic rubber (A3) having a glass transition temperature (Tg) of more than -50°C; and
a thermoplastic resin (B) containing an aromatic monomer, wherein
a content of the natural rubber (A1) in the rubber component (A) being 40% by mass or more,
a bound styrene content in the synthetic rubber (A3) having a glass transition temperature (Tg) of more than -50°C is 40% by mass or more, and
a content of the thermoplastic resin (B) containing an aromatic monomer being 10 to 50 parts by mass based on 100 parts by mass of the rubber component (A).

By using the rubber composition of the present disclosure for a tread rubber of a tire, both dry performance and wet performance can be achieved at the same time without deteriorating the low loss property of the tire.

Here, in the present disclosure, a glass transition temperature (Tg) of the rubber component (A) such as the natural rubber (A1), the synthetic rubber (A2), and the synthetic rubber (A3) can be measured by a temperature dispersion curve of tan δ and can be measured by using a differential scanning calorimeter manufactured by TA Instruments under a condition in which a sweep velocity is 5 to 10°C/min, for example.

In the rubber composition of the present disclosure, a bound styrene content in the synthetic rubber (A3) having a glass transition temperature (Tg) of more than -50°C is preferably 40% by mass or more. In this case, compatibility between the synthetic rubber (A3) having a glass transition temperature (Tg) of more than -50°C and the synthetic rubber (A2) having a glass transition temperature (Tg) of -50°C or less can be decreased.

Here, in the present disclosure, a bound styrene content in the rubber component (A) such as the synthetic rubber (A2) and the synthetic rubber (A3) is obtained by an integral ratio of ¹H-NMR spectra.

In the rubber composition of the present disclosure, a softening point of the thermoplastic resin (B) containing an aromatic monomer is preferably 100°C or more. In this case, an effect of softening the synthetic rubber (A3) having a glass transition temperature (Tg) of more than -50°C exerted by the thermoplastic resin (B) containing an aromatic monomer increases.

Here, in the present disclosure, the softening point of the thermoplastic resin (B) containing an aromatic monomer means a softening point measured by using the softening point test method [6.4 softening point test method (ring and ball method)] described in JIS K 2207.

In a preferred example of the rubber composition of the present disclosure, the thermoplastic resin (B) containing an aromatic monomer is at least one selected from the group consisting of a C₉-based resin, an α-methylstyrene-based resin, and a C₅/C₉-based resin. In this case, compatibility between the thermoplastic resin (B) containing an aromatic monomer and the synthetic rubber (A3) having a glass transition temperature (Tg) of more than -50°C is improved, and dry performance and wet performance can be improved.

In addition, in a tire of the present disclosure, the above-described rubber composition is used for a tread rubber thereof. The tire of the present disclosure can achieve both dry performance and wet performance at the same time while having a good low loss property, since the above-described rubber composition is used for a tread rubber thereof.

### (Advantageous Effect)

According to the present disclosure, a rubber composition capable of achieving both dry performance and wet performance at the same time without deteriorating the low loss property of a tire can be provided.

In addition, according to the present disclosure, a tire achieving both dry performance and wet performance at the same time while having a good low loss property can be provided.

### DETAILED DESCRIPTION

Hereinafter, a rubber composition and a tire according to the present disclosure will be illustratively described in detail based on their embodiments.

### <Rubber composition>

A rubber composition of the present disclosure includes: a rubber component (A) including a natural rubber (A1), a synthetic rubber (A2) having a glass transition temperature (Tg) of -50°C or less, and a synthetic rubber (A3) having a glass transition temperature (Tg) of more than -50°C; and a thermoplastic resin (B) containing an aromatic monomer, with a content of the natural rubber (A1) in the rubber component (A) being 40% by mass or more, and a content of the thermoplastic resin (B) containing an aromatic monomer being 10 to 50 parts by mass based on 100 parts by mass of the rubber component (A).

In the rubber composition of the present disclosure, a loss tangent (tan δ) at 0°C is increased by using the natural rubber (A1) and the synthetic rubber (A2) having a glass transition temperature (Tg) of -50°C or less as the rubber component (A) and further blending the synthetic rubber (A3) having a glass transition temperature (Tg) of more than -50°C, with the content of the natural rubber (A1) in the rubber component (A) being 40% by mass or more. Incidentally, when a synthetic rubber (A3) having a glass transition temperature (Tg) of more than -50°C is used for a rubber composition, the rubber composition hardens at 0°C in general. However, in the rubber composition of the present disclosure, the synthetic rubber (A3) having a glass transition temperature (Tg) of more than -50°C is softened by blending the thermoplastic resin (B) containing an aromatic monomer which is well compatible with the synthetic rubber (A3) having a glass transition temperature (Tg) of more than -50°C so as to increase a friction coefficient (µ) of a tire on a dry road while maintaining or improving the low loss property and wet performance of the tire, and dry performance of the tire can be improved thereby. Therefore, by using the rubber composition of the present disclosure for a tread rubber of a tire, both dry performance and wet performance can be achieved at the same time without deteriorating the low loss property of the tire.

The rubber composition of the present disclosure includes the natural rubber (A1) as the rubber component (A). The content of the natural rubber (A1) in the rubber component (A) is 40% by mass or more, preferably 50% by mass or more, and more preferably 60% by mass or more, and preferably 80% by mass or less and more preferably 70% by mass or less. When the content of the natural rubber (A1) in the rubber component (A) is 40% by mass or more, tan δ, especially tan δ at 0°C decreases, and deterioration in the low loss property of a tire to which the rubber composition is applied can be prevented.

The rubber composition of the present disclosure includes the synthetic rubber (A2) having a glass transition temperature (Tg) of -50°C or less (hereinafter sometimes abbreviated as the "low Tg synthetic rubber (A2)") as the rubber component (A). The content of the low Tg synthetic rubber (A2) in the rubber component (A) is preferably 5% by mass or more and more preferably 10% by mass or more, and preferably 30% by mass or less and more preferably 25% by mass or less. When the content of the low Tg synthetic rubber (A2) in the rubber component (A) is 5% by mass or more, the low loss property and wet performance of a tire to which the rubber composition is applied can be improved.

While the low Tg synthetic rubber (A2) is not particularly limited, examples thereof include diene-based synthetic rubber such as synthetic isoprene rubber (IR), butadiene rubber (BR), styrene-butadiene copolymer rubber (SBR), and styrene-isoprene copolymer rubber (SIR). Among them, butadiene rubber (BR) and styrene-butadiene copolymer rubber (SBR) are preferable as the low Tg synthetic rubber (A2).

In addition, while the low Tg synthetic rubber (A2) may be unmodified synthetic rubber or may be modified synthetic rubber, the low Tg synthetic rubber (A2) is preferably modified synthetic rubber. When the low Tg synthetic rubber (A2) is modified synthetic rubber, a polymer phase including the low Tg synthetic rubber (A2) can take in a large amount of a filler.

In the rubber composition of the present disclosure, the low Tg synthetic rubber (A2) may contain a monomer unit derived from styrene and may be a copolymer of styrene and a conjugated diene monomer, for example. Here, the bound styrene content in the low Tg synthetic rubber (A2) is preferably 10% by mass or less and further preferably 5% by mass or less. When the bound styrene content in the low Tg synthetic rubber (A2) is 10% by mass or less, compatibility with the synthetic rubber (A3) having a glass transition temperature (Tg) of more than -50°C described later can be decreased.

The rubber composition of the present disclosure includes the synthetic rubber (A3) having a glass transition temperature (Tg) of more than -50°C (hereinafter sometimes abbreviated as the "high Tg synthetic rubber (A3)") as the rubber component (A). The content of the high Tg synthetic rubber (A3) in the rubber component (A) is preferably 5% by mass or more and more preferably 10% by mass or more, and preferably 30% by mass or less and more preferably 25% by mass or less. When the content of the high Tg synthetic rubber (A3) in the rubber component (A) is 5% by mass or more, dry performance and wet performance of a tire to which the rubber composition is applied can be improved.

In the rubber composition of the present disclosure, the high Tg synthetic rubber (A3) preferably contains a monomer unit derived from styrene and is preferably a copolymer of styrene and a conjugated diene monomer, for example. Here, the bound styrene content in the high Tg synthetic rubber (A3) is 40% by mass or more. When the bound styrene content in the high Tg synthetic rubber (A3) is 40% by mass or more, compatibility with the above-described low Tg synthetic rubber (A2) can be decreased.

While the high Tg synthetic rubber (A3) is not particularly limited, examples thereof include diene-based synthetic rubber such as styrene-butadiene copolymer rubber (SBR) and styrene-isoprene copolymer rubber (SIR). Incidentally, while the high Tg synthetic rubber (A3) may be unmodified synthetic rubber or may be modified synthetic rubber, the high Tg synthetic rubber (A3) is preferably unmodified synthetic rubber. When the high Tg synthetic rubber (A3) is unmodified synthetic rubber, the proportion of a filler taken up by a polymer phase including the high Tg synthetic rubber (A3) decreases.

In addition, commercially available products such as "SBR0202" (bound styrene content: 40% by mass) manufactured by JSR CORPORATION and "Tufdene 4850" (bound styrene content: 40% by mass) manufactured by Asahi Kasei Corp. may be used as the high Tg synthetic rubber (A3).

In the rubber composition of the present disclosure, it is preferable that the natural rubber (A1) and the low Tg synthetic rubber (A2) are allowed to incorporate a filler in a large amount while decreasing the proportion of a filler incorporated in the high Tg synthetic rubber (A3) and that a polymer phase including the high Tg synthetic rubber (A3) is softened by the thermoplastic resin (B) containing an aromatic monomer. In addition, it is preferable that a polymer phase including the natural rubber (A1) and the low Tg synthetic rubber (A2) and a polymer phase including the high Tg synthetic rubber (A3) are not allowed to be compatible with each other from the viewpoint of separating the function of the polymer phase including the natural rubber (A1) and the low Tg synthetic rubber (A2) from the function of the polymer phase including the high Tg synthetic rubber (A3). Here, in order not to allow the polymer phase including the natural rubber (A1) and the low Tg synthetic rubber (A2) and the polymer phase including the high Tg synthetic rubber (A3) to be compatible with each other, it is preferable to set the bound styrene content in the high Tg synthetic rubber (A3) to 40% by mass or more while setting the bound styrene content in the low Tg synthetic rubber (A2) to 10% by mass or less. When the bound styrene content in the low Tg synthetic rubber (A2) is 10% by mass or less and the bound styrene content in the high Tg synthetic rubber (A3) is 40% by mass or more, the effect of the present disclosure is especially enhanced, and both dry performance and wet performance can be improved without deteriorating the low loss property of a tire.

When the low Tg synthetic rubber (A2) and the high Tg synthetic rubber (A3) are each modified synthetic rubber, examples of a modifying functional group in the modified synthetic rubber include a nitrogen-containing functional group, a silicon-containing functional group, and an oxygen-containing functional group.

As the modified synthetic rubber, a polymer obtained by using a conjugated diene compound or a conjugated diene compound and an aromatic vinyl compound as monomers and modifying a molecular terminal and/or a main chain of a polymer or copolymer of the conjugated compound or a copolymer of the conjugated diene compound and the aromatic vinyl compound with a modifier, and a polymer obtained by using a conjugated diene compound or a conjugated diene compound and an aromatic vinyl compound as monomers and polymerizing or copolymerizing these monomers using a polymerization initiator having a modifying functional group can be used.

With respect to the monomers used for synthesizing the modified synthetic rubber, examples of the conjugated diene compound include 1,3-butadiene, isoprene, 1,3-pentadiene, 2,3-dimethylbutadiene, 2-phenyl-1,3-butadiene, and 1,3-hexadiene, and examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene.

As the modifier, a hydrocarbyloxy silane compound is preferable.

As the hydrocarbyloxy silane compound, a compound represented by the following general formula (I):

R¹ₐ-Si-(OR²)₄₋ₐ ... (I)

is preferable.

In general formula (I), R¹ and R² each independently represent a monovalent aliphatic hydrocarbon group having 1 to 20 carbon atoms or a monovalent aromatic hydrocarbon group having 6 to 18 carbon atoms; a is an integer of 0 to 2; when two or more OR²s exist, each OR² may be the same or different from one another; and no active proton is contained in the molecule.

As the hydrocarbyloxy silane compound, a compound represented by the following general formula (II): 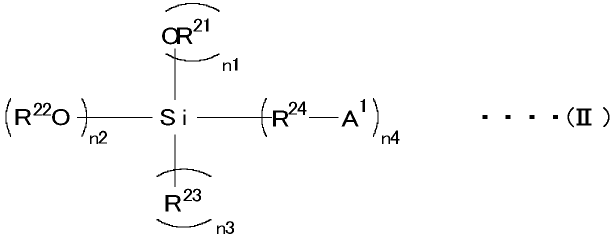 is also preferable.

In general formula (II), n1 + n2 + n3 + n4 is four (provided that n2 is an integer of 1 to 4, and n1, n3, and n4 are each an integer of 0 to 3); A¹ is at least one functional group selected from a saturated cyclic tertiary amine compound residue, an unsaturated cyclic tertiary amine compound residue, a ketimine residue, a nitrile group, an isocyanate group, a thioisocyanate group, an epoxy group, a thioepoxy group, an isocyanuric acid trihydrocarbyl ester group, a carbonic acid dihydrocarbyl ester group, a pyridine group, a ketone group, a thioketone group, an aldehyde group, a thioaldehyde group, an amide group, a carboxylic acid ester group, a thiocarboxylic acid ester group, a metal salt of a carboxylic acid ester, a metal salt of a thiocarboxylic acid ester, a carboxylic acid anhydride residue, a carboxylic acid halogen compound residue, a monovalent group having epoxy, silazane, or disulfide, and a primary or secondary amino group having a hydrolyzable group or a mercapto group having a hydrolyzable group, when n4 is two or more, A¹s may be the same or different from one another, and A¹ may be a divalent group bonding to Si to form a cyclic structure; R²¹ is a monovalent aliphatic or alicyclic hydrocarbon group having 1 to 20 carbon atoms or a monovalent aromatic hydrocarbon group having 6 to 18 carbon atoms, and when n1 is two or more, R²¹s may be the same or different from one another; R²³ is a monovalent aliphatic or alicyclic hydrocarbon group having 1 to 20 carbon atoms, a monovalent aromatic hydrocarbon group having 6 to 18 carbon atoms, or a halogen atom, and when n3 is two or more, R²³s may be the same or different from one another; R²² is a monovalent aliphatic or alicyclic hydrocarbon group having 1 to 20 carbon atoms, which may contain a nitrogen atom and/or a silicon atom, or a monovalent aromatic hydrocarbon group having 6 to 18 carbon atoms, which may contain a nitrogen atom and/or a silicon atom, and when n2 is two or more, R²²s may be the same or different from one another or may form a ring together; and R²⁴ is a divalent aliphatic or alicyclic hydrocarbon group having 1 to 20 carbon atoms or a divalent aromatic hydrocarbon group having 6 to 18 carbon atoms, and when n4 is two or more, R²⁴s may be the same or different from one another.

As the hydrolyzable group in the primary or secondary amino group having a hydrolyzable group or the mercapto group having a hydrolyzable group, trimethylsilyl group and tert-butyldimethylsilyl group are preferable, and trimethylsilyl group is especially preferable.

Examples of the compound containing a monovalent group having epoxy include 2-glycidoxyethyltrimethoxysilane,
2-glycidoxyethyltriethoxysilane, (2-glycidoxyethyl)methyldimethoxysilane,
3-glycidoxypropyltrimethoxysilane, 3-glycidoxypropyltriethoxysilane,
(3-glycidoxypropyl)methyldimethoxysilane,
2-(3,4-epoxycyclohexyl)ethyltrimethoxysilane,
2-(3,4-epoxycyclohexyl)ethyltriethoxysilane, and
2-(3,4-epoxycyclohexyl)ethyl(methyl)dimethoxysilane.

As the compound represented by general formula (II), a compound represented by the following general formula (III): 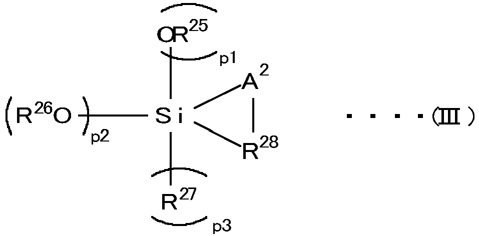 is preferable.

In general formula (III), p1 + p2 + p3 is two (provided that p2 is an integer of 1 to 2, and p1 and p3 are each an integer of 0 to 1); A² is NRa (Ra is a monovalent hydrocarbon group, a hydrolyzable group, or a nitrogen-containing organic group) or a sulfur atom; R²⁵ is a monovalent aliphatic or alicyclic hydrocarbon group having 1 to 20 carbon atoms or a monovalent aromatic hydrocarbon group having 6 to 18 carbon atoms; R²⁷ is a monovalent aliphatic or alicyclic hydrocarbon group having 1 to 20 carbon atoms, a monovalent aromatic hydrocarbon group having 6 to 18 carbon atoms, or a halogen atom; R²⁶ is a monovalent aliphatic or alicyclic hydrocarbon group having 1 to 20 carbon atoms, which may contain a nitrogen atom and/or a silicon atom, a monovalent aromatic hydrocarbon group having 6 to 18 carbon atoms, which may contain a nitrogen atom and/or a silicon atom, or a nitrogen-containing organic group which may contain a nitrogen atom and/or a silicon atom, and when p2 is two, R²⁶s may be the same or different from each other or may form a ring together; and R²⁸ is a divalent aliphatic or alicyclic hydrocarbon group having 1 to 20 carbon atoms or a divalent aromatic hydrocarbon group having 6 to 18 carbon atoms.

As the hydrolyzable group, trimethylsilyl group and tert-butyldimethylsilyl group are preferable, and trimethylsilyl group is especially preferable.

As the compound represented by general formula (II), a compound represented by the following general formula (IV): 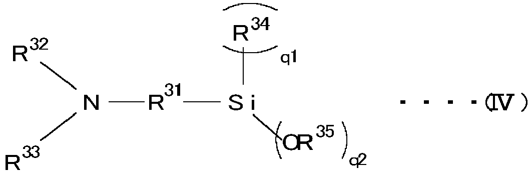 is also preferable.

In general formula (IV), q1 + q2 is three (provided that q1 is an integer of 0 to 2, and q2 is an integer of 1 to 3); R³¹ is a divalent aliphatic or alicyclic hydrocarbon group having 1 to 20 carbon atoms or a divalent aromatic hydrocarbon group having 6 to 18 carbon atoms; R³² and R³³ are each independently a hydrolyzable group, a monovalent aliphatic or alicyclic hydrocarbon group having 1 to 20 carbon atoms, or a monovalent aromatic hydrocarbon group having 6 to 18 carbon atoms; R³⁴ is a monovalent aliphatic or alicyclic hydrocarbon group having 1 to 20 carbon atoms or a monovalent aromatic hydrocarbon group having 6 to 18 carbon atoms, and when q1 is two, R³⁴s may be the same or different from each other; and R³⁵ is a monovalent aliphatic or alicyclic hydrocarbon group having 1 to 20 carbon atoms or a monovalent aromatic hydrocarbon group having 6 to 18 carbon atoms, and when q2 is two or more, R³⁵s may be the same or different from one another.

As the hydrolyzable group, trimethylsilyl group and tert-butyldimethylsilyl group are preferable, and trimethylsilyl group is especially preferable.

As the compound represented by general formula (II), a compound represented by the following general formula (V): 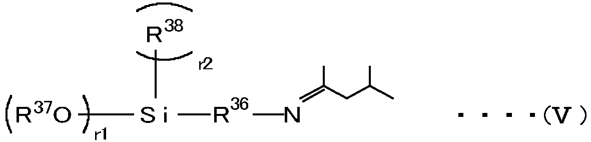 is also preferable.

In general formula (V), r1 + r2 is three (provided that r1 is an integer of 1 to 3, and r2 is an integer of 0 to 2); R³⁶ is a divalent aliphatic or alicyclic hydrocarbon group having 1 to 20 carbon atoms or a divalent aromatic hydrocarbon group having 6 to 18 carbon atoms; R³⁷ is a dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, a monovalent aliphatic or alicyclic hydrocarbon group having 1 to 20 carbon atoms, or a monovalent aromatic hydrocarbon group having 6 to 18 carbon atoms, and when r1 is two or more, R³⁷s may be the same or different from one another; and R³⁸ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is two, R³⁸s may be the same or different from each other.

As the compound represented by general formula (II), a compound represented by the following general formula (VI): 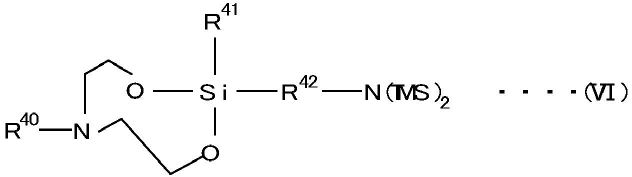 is also preferable.

In general formula (VI), R⁴⁰ is a trimethylsilyl group, a monovalent aliphatic or alicyclic hydrocarbon group having 1 to 20 carbon atoms, or a monovalent aromatic hydrocarbon group having 6 to 18 carbon atoms; R⁴¹ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms; and R⁴² is a divalent aliphatic or alicyclic hydrocarbon group having 1 to 20 carbon atoms or a divalent aromatic hydrocarbon group having 6 to 18 carbon atoms. Here, TMS refers to trimethylsilyl group (the same applies to the following).

As the compound represented by general formula (II), a compound represented by the following general formula (VII): 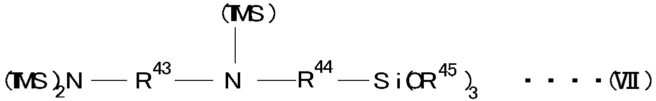 is also preferable.

In general formula (VII), R⁴³ and R ⁴⁴ are each independently a divalent aliphatic or alicyclic hydrocarbon group having 1 to 20 carbon atoms or a divalent aromatic hydrocarbon group having 6 to 18 carbon atoms; and R⁴⁵ is a monovalent aliphatic or alicyclic hydrocarbon group having 1 to 20 carbon atoms or a monovalent aromatic hydrocarbon group having 6 to 18 carbon atoms, and R⁴⁵s may be the same or different from one another.

As the compound represented by general formula (II), a compound represented by the following general formula (VIII): 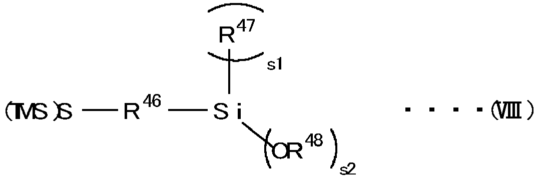 is also preferable.

In general formula (VIII), s1 + s2 is three (provided that s1 is an integer of 0 to 2, and s2 is an integer of 1 to 3); R⁴⁶ is a divalent aliphatic or alicyclic hydrocarbon group having 1 to 20 carbon atoms or a divalent aromatic hydrocarbon group having 6 to 18 carbon atoms; R⁴⁷ and R ⁴⁸ are each independently a monovalent aliphatic or alicyclic hydrocarbon group having 1 to 20 carbon atoms or a monovalent aromatic hydrocarbon group having 6 to 18 carbon atoms. Plural R⁴⁷s or plural R⁴⁸s may be the same or different from one another.

As the compound represented by general formula (II), a compound represented by the following general formula (IX): 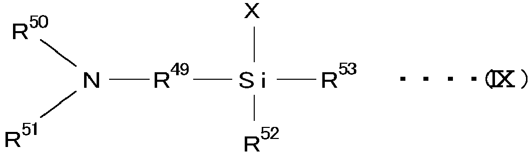 is also preferable.

In general formula (IX), X is a halogen atom; R⁴⁹ is a divalent aliphatic or alicyclic hydrocarbon group having 1 to 20 carbon atoms or a divalent aromatic hydrocarbon group having 6 to 18 carbon atoms; R⁵⁰ and R⁵¹ are each independently a hydrolyzable group, a monovalent aliphatic or alicyclic hydrocarbon group having 1 to 20 carbon atoms, or a monovalent aromatic hydrocarbon group having 6 to 18 carbon atoms, or R⁵⁰ and R⁵¹ bond to each other to form a divalent organic group; and R⁵² and R⁵³ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

R⁵⁰ and R⁵¹ are each preferably a hydrolyzable group, as the hydrolyzable group, trimethylsilyl group and tert-butyldimethylsilyl group are preferable, and trimethylsilyl group is especially preferable.

As the hydrocarbyloxy silane compound represented by general formula (II), compounds represented by the following general formulae (X) to (XIII): 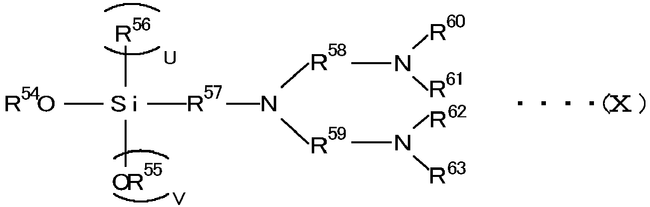 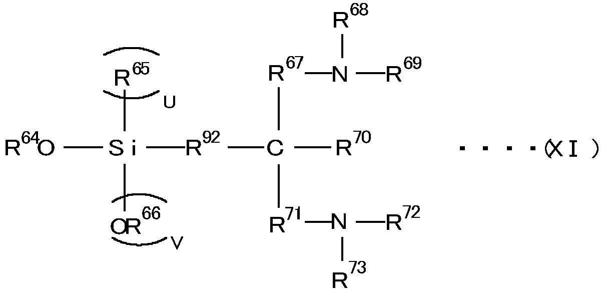 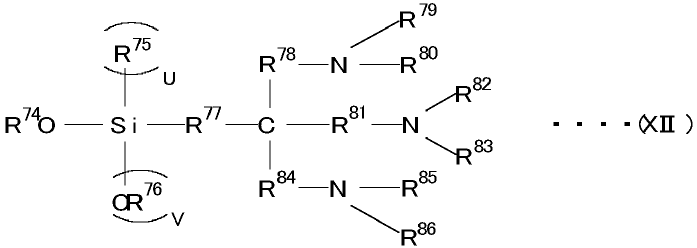 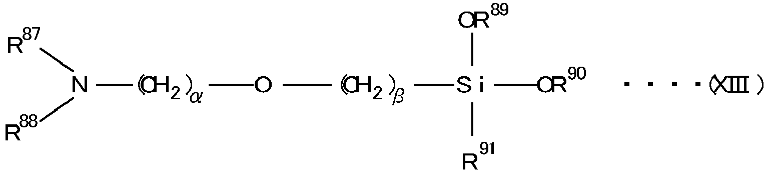 are also preferable.

In general formulae (X) to (XIII), the symbols U and V are each an integer of 0 to 2 satisfying U + V = 2. The groups R⁵⁴ to R⁹² in general formulae (X) to (XIII) may be the same or different from one another and are each a monovalent or divalent aliphatic or alicyclic hydrocarbon group having 1 to 20 carbon atoms or a monovalent or divalent aromatic hydrocarbon group having 6 to 18 carbon atoms. Incidentally, α and β in general formula (XIII) are each an integer of 0 to 5.

As the polymerization initiator having a modifying functional group, a lithium amide compound is preferable. Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, and lithium methylphenethylamide.

In polymerizing monomers for manufacturing the modified synthetic rubber, while anionic polymerization using the above-described polymerization initiator having a modifying functional group or other lithium compounds (that is, a polymerization initiator having no modifying functional group) may be employed, polymerization reaction of monomers is not limited thereto, and coordination polymerization may be employed, for example. Here, when monomers are polymerized by coordination polymerization, a rare-earth metal compound is preferably used as a polymerization initiator, and it is more preferable that the following component (a), component (b), and component (c) are used in combination.

Component (a) used for coordination polymerization described above is selected from a rare-earth metal compound, a complex compound of a rare-earth metal compound and a Lewis base, and the like. Here, examples of the rare-earth metal compound include a carboxylic acid salt, alkoxide, β-diketone complex, phosphoric acid salt, phosphorous acid salt, and the like of a rare earth element, and examples of the Lewis base include acetylacetone, tetrahydrofuran, pyridine, N,N-dimethylformamide, thiophene, diphenyl ether, triethylamine, an organic phosphorus compound, and a monohydric or dihydric alcohol. As the rare earth element of the rare-earth metal compound, lanthanum, neodymium, praseodymium, samarium, and gadolinium are preferable, and neodymium is especially preferable among them. In addition, specific examples of component (a) include neodymium tri-2-ethylhexanoate and a complex compound thereof with acetylacetone, neodymium trineodecanoate and a complex compound thereof with acetylacetone, and neodymium tri-n-butoxide.

Component (b) used for coordination polymerization described above is selected from organic aluminum compounds. Specific examples of the organic aluminum compounds include a trihydrocarbyl aluminum compound, a hydrocarbyl aluminum hydride, and a hydrocarbyl aluminoxane compound having a hydrocarbon group having 1 to 30 carbon atoms. Specific examples of the organic aluminum compounds include trialkyl aluminum, dialkyl aluminum hydride, alkyl aluminum dihydride, and alkyl aluminoxane. Incidentally, it is preferable that an aluminoxane and another organic aluminum compound are used in combination as component (b).

Component (c) used for coordination polymerization described above is selected from a hydrolyzable halogen-containing compound or a complex compound thereof with a Lewis base; an organic halide having a tertiary alkyl halide, benzyl halide, or allyl halide; an ionic compound including a non-coordinating anion and a counter cation; and the like. Specific examples of component (c) include an alkylaluminum dichloride, a dialkylaluminum chloride, silicon tetrachloride, tin tetrachloride, a complex of zinc chloride and a Lewis base such as an alcohol, a complex of magnesium chloride and a Lewis base such as an alcohol, benzyl chloride, t-butyl chloride, benzyl bromide, t-butyl bromide, and triphenylcarbonium tetrakis(pentafluorophenyl)borate.

In addition, the modified synthetic rubber may be reacted with a condensation promoter including a metal element or at least one selected from the group consisting of an inorganic acid and a metal halide after being reacted with a modifier such as a hydrocarbyloxy silane compound. By virtue of reacting the condensation promoter including a metal element or at least one selected from the group consisting of an inorganic acid and a metal halide described above, a modified synthetic rubber with a high Mooney viscosity and excellent shape stability can be manufactured.

As the condensation promoter including a metal element, a metal compound containing at least one metal element out of metal elements belonging to group 2 to group 15 of the periodic table is preferably used. Specific examples of the metal elements include titanium, zirconium, aluminum, bismuth, and tin. In addition, as the condensation promoter including a metal element, alkoxides, carboxylic acid salts, or acetyl acetonate complex salts of the above-described metal elements are preferable. Specifically, as the condensation promoter, tetrakis(2-ethyl-1,3-hexanediolate)titanium, tetrakis(2-ethylhexyloxy)titanium, tetra(octanedioleate)titanium, tris(2-ethylhexanoate)bismuth, tetra-n-propoxyzirconium, tetra-n-butoxyzirconium, zirconium bis(2-ethylhexanoate) oxide, zirconium bis(oleate) oxide, aluminum triisopropoxide, aluminum tri-sec-butoxide, aluminum tris(2-ethylhexanoate), aluminum tristearate, zirconium tetrakis(acetylacetonate), aluminum tris(acetylacetonate), tin bis(2-ethylhexanoate), di-n-octyltinbis(2-ethylhexylmaleate), and the like are preferable.

On the other hand, examples of the inorganic acid include hydrochloric acid, sulfuric acid, and phosphoric acid.

In addition, as the metal halide, a metal halide containing at least one metal element out of metal elements belonging to group 2 to group 15 of the periodic table is preferably used, and it is more preferable that a halide containing at least one metal atom selected from the group consisting of silicon, tin, aluminum, zinc, titanium, and zirconium is used, for example. Specifically, as the metal halide, trimethylsilyl chloride, dimethyldichlorosilane, methyltrichlorosilane, silicon tetrachloride, methyldichlorosilane, tin tetrachloride, diethyl aluminum chloride, ethyl aluminum sesquichloride, ethyl aluminum dichloride, zinc chloride, titanium tetrachloride, titanocene dichloride, zirconium tetrachloride, zirconocene dichloride, and the like are preferable.

Incidentally, reaction with the inorganic acid or the metal halide is preferably conducted in the presence of water. The water may be used singly or may be used in a form of a solution such as alcohol, micelles dispersed in a hydrocarbon solvent, or the like.

In addition, the modified synthetic rubber may be stabilized by being reacted with a carboxylic acid partial ester of a polyhydric alcohol after being reacted with a modifier such as a hydrocarbyloxy silane compound. Here, the carboxylic acid partial ester of a polyhydric alcohol is an ester of a polyhydric alcohol and carboxylic acid and is a partial ester having one or more hydroxy groups. Specifically, an ester of a sugar or modified sugar having four or more carbon atoms and a fatty acid is preferably used. More preferably, examples of this ester include (1) a fatty acid partial ester of a polyhydric alcohol, especially a partial ester (which may be any of monoester, diester, and triester) of a saturated higher fatty acid or unsaturated higher fatty acid having 10 to 20 carbon atoms and a polyhydric alcohol, and (2) an ester compound in which one to three partial esters of a polyhydric carboxylic acid and a higher alcohol bond to a polyhydric alcohol.

As the polyhydric alcohol used as a raw material of the partial ester, a sugar having at least three hydroxy groups and having five or six carbon atoms (which may be hydrogenated or may not be hydrogenated), glycol, a polyhydroxy compound, and the like are preferably used. In addition, a raw material fatty acid is preferably a saturated or unsaturated fatty acid having 10 to 20 carbon atoms, and stearic acid, lauric acid, or palmitic acid is used, for example.

Among the fatty acid partial esters of a polyhydric alcohol, a sorbitan fatty acid ester is preferable, and specific examples thereof include sorbitan monolauric acid ester, sorbitan monopalmitic acid ester, sorbitan monostearic acid ester, sorbitan tristearic acid ester, sorbitan monooleic acid ester, and sorbitan trioleic acid ester.

The rubber composition of the present disclosure includes the thermoplastic resin (B) containing an aromatic monomer. The thermoplastic resin (B) containing an aromatic monomer is well compatible with the high Tg synthetic rubber (A3) described above and has a function of softening the high Tg synthetic rubber (A3). In addition, an elastic modulus in a high strain region can be reduced while enhancing an elastic modulus in a low strain region by blending the thermoplastic resin (B) in the rubber composition. Therefore, by virtue of applying the rubber composition blended with the thermoplastic resin (B) to a tread of a tire, rigidity required for steering stability during traveling can be secured while increasing a deformation volume of a tread rubber in the vicinity of a contact patch with a road surface at which strain during traveling is large. As a result, a friction coefficient (µ) on a wet road surface increases, and wet performance of a tire can be improved.

The content of the thermoplastic resin (B) containing an aromatic monomer is 10 parts by mass or more and preferably 12 parts by mass or more, and is 50 parts by mass or less and preferably 40 parts by mass or less based on 100 parts by mass of the rubber component (A). When the content of the thermoplastic resin (B) containing an aromatic monomer is 10 parts by mass or more based on 100 parts by mass of the rubber component (A), an effect of decreasing an elastic modulus of the rubber composition in a high strain region increases. In addition, when the content of the thermoplastic resin (B) containing an aromatic monomer is 50 parts by mass or less based on 100 parts by mass of the rubber component (A), it is easier to suppress decrease of an elastic modulus of the rubber composition in a low strain region. Therefore, when the content of the thermoplastic resin (B) is 10 to 50 parts by mass based on 100 parts by mass of the rubber component (A), wet performance of a tire can be improved.

In the rubber composition of the present disclosure, the thermoplastic resin (B) containing an aromatic monomer preferably has a softening point of 100°C or more. When the softening point of the thermoplastic resin (B) containing an aromatic monomer is 100°C or more, the effect of softening the high Tg synthetic rubber (A3) increases.

Examples of the thermoplastic resin (B) containing an aromatic monomer include a C₉-based resin, an α-methylstyrene-based resin, a C₅/C₉-based resin, an alkylphenol resin, and a terpenephenol resin, and a C₉-based resin, an α-methylstyrene-based resin, and a C₅/C₉-based resin are preferable in terms of compatibility with the high Tg synthetic rubber (A3) among them.

The C₉-based resin is a resin obtained by polymerizing a C₉ aromatic series, with a main monomer thereof being vinyltoluene, alkylstyrene, or indene, which is a C₉ fraction produced simultaneously with basic petrochemical materials such as ethylene and propylene as a by-product through thermal decomposition of naphtha in petrochemical industry, for example. Here, specific examples of the C₉ fraction obtained through thermal decomposition of naphtha include vinyltoluene, α-methylstyrene, β-methylstyrene, γ-methylstyrene, o-methylstyrene, p-methylstyrene, and indene. The C₉-based resin can be obtained by using a C₈ fraction such as styrene and a C₁₀ fraction such as methylindene and 1,3-dimethylstyrene, further using naphthalene, vinylnaphthalene, vinylanthracene, p-tert-butylstyrene, and the like as raw materials together with the C₉ fractions, and copolymerizing these C₈ to C₁₀ fractions and the like as a mixture with a Friedel-Craftes catalyst, for example. In addition, the C₉-based resin may be a modified petroleum resin modified by a compound having a hydroxy group, an unsaturated carboxylic acid compound, and the like. Incidentally, commercially available products can be used as the C₉-based resin, and examples of an unmodified C₉-based petroleum resin include trade names of "Nisseki Neopolymer^{®} (Nisseki Neopolymer is a registered trademark in Japan, other countries, or both) L-90", "Nisseki Neopolymer^{®} 120", "Nisseki Neopolymer^{®} 130", and "Nisseki Neopolymer^{®} 140" (manufactured by JX NIPPON OIL & ENERGY CORPORATION).

The α-methylstyrene-based resin is a resin obtained by using α-methylstyrene as a monomer and polymerizing the α-methylstyrene or copolymerizing the α-methylstyrene and another comonomer. Incidentally, commercially available products can be used as the α-methylstyrene-based resin, and examples thereof include trade names of "FTR0100", and "FTR0120" (manufactured by Mitsui Chemicals, Inc.).

The C₅/C₉-based resin refers to a C₅/C₉-based synthetic petroleum resin, examples of the C₅/C₉-based resin include a solid polymer obtained by polymerizing a C₅ fraction and a C₉ fraction derived from petroleum using a Friedel-Craftes catalyst such as AlCl₃ and BF₃, for example, and more specific examples include a copolymer containing styrene, vinyltoluene, α-methylstyrene, indene, and the like as a main component. A resin low in components of C₉ or more is preferable as the C₅/C₉-based resin in terms of compatibility with the rubber component (A). Here, the phrase "low in components of C₉ or more" means that components of C₉ or more comprise less than 50% by mass and preferably 40% by mass or less of the entire amount of the resin. Commercially available products can be used as the C₅/C₉-based resin, and examples thereof include a trade name of "Quintone^{®} (Quintone is a registered trademark in Japan, other countries, or both) G100B" (manufactured by Zeon Corporation), a trade name of "ECR213" (manufactured by ExxonMobil Chemical Company), and a trade name of "T-REZ RD104" (manufactured by Tonen Chemical Corporation).

The rubber composition of the present disclosure preferably includes a filler. In addition, the rubber composition of the present disclosure preferably includes silica as the filler. A proportion of silica in the filler is preferably 70% by mass or more, more preferably 80% by mass or more, and still more preferably 90% by mass or more, and silica may comprise the entire amount of the filler. When silica is included as the filler, the tan δ of the rubber composition decreases, and the low loss property of a tire to which the rubber composition is applied is improved. In addition, when the proportion of silica in the filler is 70% by mass or more, the tan δ of the rubber composition decreases, and the low loss property of a tire to which the rubber composition is applied is further improved.

There is no particular restriction on the silica, and examples thereof include wet silica (hydrous silicate), dry silica (anhydrous silicate), calcium silicate, and aluminum silicate, and wet silica is preferable among them. One of these kinds of silica may be used singly, or two or more thereof may be used in combination.

The blending amount of the silica is preferably within a range of 40 to 70 parts by mass and more preferably within a range of 45 to 60 parts by mass based on 100 parts by mass of the rubber component of the rubber composition. When the blending amount of the silica is 40 parts by mass or more based on 100 parts by mass of the rubber component, the tan δ of the rubber composition decreases, and the low loss property of a tire to which the rubber composition is applied is further improved. In addition, when the blending amount of the silica is 70 parts by mass or less based on 100 parts by mass of the rubber component, flexibility of the rubber composition is high, and by applying the rubber composition to a tread rubber of a tire, a deformation volume of the tread rubber increases and wet performance of the tire can be improved.

It is preferable that the rubber composition of the present disclosure further include carbon black as the filler, and a blending amount of the carbon black is preferably within a range of 1 to 15 parts by mass and more preferably within a range of 3 to 10 parts by mass based on 100 parts by mass of the rubber component. Rigidity of the rubber composition is improved by blending one part by mass or more of carbon black. In addition, since increase of tan δ can be suppressed as long as the blending amount of carbon black is 15 parts by mass or less, by applying the rubber composition to a tread rubber of a tire, both the low loss property and wet performance of the tire can be achieved at the same time at a high level.

There is no particular restriction on the carbon black, and examples thereof include carbon black of GPF, FEF, HAF, ISAF, and SAF grades. Among them, carbon black of ISAF and SAF grades is preferable in terms of improving wet performance of a tire. One kind of these kinds of carbon black may be used singly, or two or more kinds thereof may be used in combination.

In addition, the filler may include aluminum hydroxide, alumina, clay, calcium carbonate, and the like in addition to silica and carbon black described above.

In the rubber composition of the present disclosure, a blending amount of the filler is preferably 30 parts by mass or more and more preferably 40 parts by mass or more, and is preferably 100 parts by mass or less and more preferably 80 parts by mass or less based on 100 parts by mass of the rubber component. When the blending amount of the filler in the rubber composition is within the above-described range, by applying the rubber composition to a tread rubber of a tire, the low loss property and wet performance of the tire can be further improved.

It is preferable that the rubber composition of the present disclosure further contains a silane coupling agent so as to improve the blending effect of silica described above. The silane coupling agent is not particularly limited, and examples thereof include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxy silane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. One these silane coupling agents may be used singly, or two or more thereof may be used in combination.

In addition, a blending amount of the silane coupling agent is preferably within a range of 2 to 20 parts by mass and more preferably within a range of 5 to 15 parts by mass based on 100 parts by mass of the silica. When the blending amount of the silane coupling agent is 2 parts by mass or more based on 100 parts by mass of silica, the blending effect of silica is sufficiently improved. In addition, when the blending amount of the silane coupling agent is 20 parts by mass or less based on 100 parts by mass of silica, the rubber component is less likely to gelate.

The rubber composition of the present disclosure may further include a softener in terms of processability and operability. A blending amount of the softener is preferably within a range of 1 to 5 parts by mass and more preferably within a range of 1.5 to 3 parts by mass based on 100 parts by mass of the rubber component. By virtue of blending 1 part by mass or more of the softener, kneading of the rubber composition becomes easy. In addition, decrease in rigidity of the rubber composition can be suppressed by blending 5 parts by mass or less of the softener.

Here, examples of the softener include mineral oil derived from minerals; aromatic oil, paraffinic oil, and naphthenic oil derived from petroleum; and palm oil derived from natural material. However, a softener derived from minerals and a softener derived from petroleum are preferable in terms of improving wet performance of a tire among them.

The rubber composition of the present disclosure may further include a fatty acid metal salt. Examples of a metal element used for the fatty acid metal salt include Zn, K, Ca, Na, Mg, Co, Ni, Ba, Fe, Al, Cu, and Mn, and Zn is preferable. On the other hand, examples of a fatty acid used for the fatty acid metal salt include saturated or unsaturated fatty acids each having 4 to 30 carbon atoms and having a linear, branched, or cyclic structure or a mixture thereof, and a saturated or unsaturated linear fatty acid having 10 to 22 carbon atoms is preferable among them. Examples of the saturated linear fatty acid having 10 to 22 carbon atoms include lauric acid, myristic acid, palmitic acid, and stearic acid, and examples of the unsaturated linear fatty acid having 10 to 22 carbon atoms include oleic acid, linoleic acid, linolenic acid, and arachidonic acid. One of these fatty acid metal salts may be used singly, or two or more thereof may be used in combination.

A blending amount of the fatty acid metal salt is preferably within a range of 0.1 to 10 parts by mass and more preferably within a range of 0.5 to 5 parts by mass based on 100 parts by mass of the rubber component of the rubber composition.

Compounding agents usually used in rubber industry such as stearic acid, an age resistor, zinc oxide (zinc white), a vulcanization accelerator, a vulcanizing agent may be appropriately selected and blended in the rubber composition of the present disclosure in addition to the rubber component (A), the thermoplastic resin (B) containing an aromatic monomer, the filler, the silane coupling agent, the softener, and the fatty acid metal salt described above within a range not impairing the object of the present disclosure. Commercially available products can be preferably used as these compounding agents.

The rubber composition of the present disclosure is available for various kinds of rubber products including a tire. Especially, the rubber composition of the present disclosure is suitable for a tread rubber of a tire.

### <Tire>

In a tire of the present disclosure, the rubber composition described above is used for a tread rubber thereof. Since the above-described rubber composition is used for the tread rubber of the tire of the present disclosure, the tire of the present disclosure has a good low loss property, and both dry performance and wet performance can be achieved at the same time. In addition, while the tire of the present disclosure is available for tires for various types of vehicles, the tire of the present disclosure is suitable for tires for passenger vehicles.

The tire of the present disclosure may be obtained by using an unvulcanized rubber composition which is to be molded and subsequently vulcanized or may be obtained by using semi-vulcanized rubber which has been subjected to a preliminary vulcanization process or the like and which is to be molded and further subjected to main vulcanization according to the type of a tire to be applied. Incidentally, the tire of the present disclosure is preferably a pneumatic tire, and an inert gas such as nitrogen, argon, and helium can be used as gas filling the pneumatic tire in addition to ordinary air or air in which an oxygen partial pressure is adjusted.

### EXAMPLES

Hereinafter, the present disclosure will be described in more detail with reference to Examples. However, the present disclosure is not limited by the following examples.

### <Preparation and evaluation of rubber composition>

Rubber compositions are manufactured according to the formulations provided in Table 1 by using ordinary Banbury mixer, and a storage modulus (E') and a loss tangent (tan δ) are measured according to the following methods with respect to each of the obtained rubber compositions. Furthermore, a friction coefficient on a dry road surface (dry µ), a friction coefficient on a wet road surface (wet µ), and wear resistance are evaluated. Results are provided in Table 1.

### (1) Storage modulus (E') and loss tangent (tan δ)

With respect to vulcanized rubber obtained by vulcanizing each of the rubber compositions at 145°C for 33 minutes, a storage modulus (E') at 0°C and loss tangents (tan δ) at 0°C and 30°C are measured by using a spectrometer manufactured by Ueshima Seisakusho Co., Ltd. under the conditions of an initial load of 160 mg, a dynamic strain of 1%, and a frequency of 52 Hz. A smaller loss tangent (tan δ) indicates a more excellent low loss property.

### (2) Friction coefficient on dry road surface (dry µ)

A radial tire for a passenger vehicle having a size: 195/65R15 is prepared according to an ordinary method, with each of the rubber compositions used for its tread rubber.

Four sample tires are installed on a passenger vehicle with an exhaust volume of 2000 cc, the passenger vehicle is driven on an asphalt evaluation path of a test course, the tires are locked by applying a brake at a time when the speed reaches 80 km/hr, and a distance until the passenger vehicle stops is measured. Each result is expressed by a reciprocal of the distance as an index based on the value of Comparative Example 1 as 100. A larger index value indicates a larger friction coefficient on a dry road surface (dry µ) and more excellent dry performance.

### (3) Friction coefficient on wet road surface (wet µ)

A radial tire for a passenger vehicle having a size: 195/65R15 is prepared according to an ordinary method, with each of the rubber compositions used for its tread rubber.

Four sample tires are installed on a passenger vehicle with an exhaust volume of 2000 cc, the passenger vehicle is driven on a steel-plate wet road evaluation path of a test course, the tires are locked by applying a brake at a time when the speed reaches 40 km/hr, and a distance until the passenger vehicle stops is measured. Each result is expressed by a reciprocal of the distance as an index based on the value of Comparative Example 1 as 100. A larger index value indicates a larger friction coefficient on a wet road surface (wet µ) and more excellent wet performance.

### (4) Wear resistance

After each of the obtained rubber compositions is vulcanized at 145°C for 33 minutes, a wear amount is measured at 23°C by using Lambourn abrasion tester in accordance with JIS K 6264-2:2005 and expressed by an index based on a reciprocal of the wear amount of Comparative Example 1 as 100. A larger index value indicates a smaller wear amount and good wear resistance.

**[Table 1]**

| | | | Comparative Example 1 | Comparative Example 2 | Example 1 | Example 2 | Example 3 | Example 4 | Example 5 |
|---|---|---|---|---|---|---|---|---|---|
| Formulation | Natural rubber ^{∗}1 | Parts by mass | 70 | 65 | 60 | 65 | 65 | 65 | 65 |
| | Synthetic rubber 1 ^{∗}2 | | 30 | 15 | 20 | 20 | - | 20 | 20 |
| | Synthetic rubber 2 ^{∗}3 | | - | - | - | - | 20 | - | - |
| | Synthetic rubber 3 ^{∗}4 | | - | 20 | 20 | 15 | 15 | 15 | 15 |
| | Carbon black ^{∗}5 | | 10 | 10 | 10 | 10 | 10 | 10 | 10 |
| | Silica ^{∗}6 | | 60 | 60 | 60 | 60 | 60 | 60 | 60 |
| | Silane coupling agent ^{∗}7 | | 6 | 6 | 6 | 6 | 6 | 6 | 6 |
| | Stearic acid | | 1 | 1 | 1 | 1 | 1 | 1 | 1 |
| | Wax ^{∗}8 | | 2 | 2 | 2 | 2 | 2 | 2 | 2 |
| | Age resistor 6PPD ^{∗}9 | | 4 | 4 | 4 | 4 | 4 | 4 | 4 |
| | Age resistor TMQ ^{∗}10 | | 0.3 | 0.3 | 0.3 | 0.3 | 0.3 | 0.3 | 0.3 |
| | Zinc white | | 2.5 | 2.5 | 2.5 | 2.5 | 2.5 | 2.5 | 2.5 |
| | Vulcanization accelerator DPG ^{∗}11 | | 0.8 | 0.8 | 0.8 | 0.8 | 0.8 | 0.8 | 0.8 |
| | Vulcanization accelerator MBTS ^{∗}12 | | 0.8 | 0.8 | 0.8 | 0.8 | 0.8 | 0.8 | 0.8 |
| | Vulcanization accelerator CBS ^{∗}13 | | 0.9 | 0.9 | 0.9 | 0.9 | 0.9 | 0.9 | 0.9 |
| | Sulfur | | 1.5 | 1.5 | 1.5 | 1.5 | 1.5 | 1.5 | 1.5 |
| | C₉-based resin ^{∗}14 | | 15 | - | 15 | 15 | 15 | - | - |
| | α-Methylstyrene-based resin ^{∗}15 | | - | - | - | - | - | 15 | - |
| | C₅-based resin ^{∗}16 | | - | 15 | - | - | - | - | - |
| | C₅/C₉-based resin ^{∗}17 | | - | - | - | - | - | - | 15 |
| Evaluation result | E' at 0°C | MPa | 10.7 | 21.1 | 18.3 | 16.5 | 15.3 | 15.9 | 15.5 |
| | tan δ at 0°C | - | 0.477 | 0.598 | 0.597 | 0.587 | 0.511 | 0.601 | 0.599 |
| | tan δ at 30°C | - | 0.254 | 0.222 | 0.278 | 0.288 | 0.221 | 0.265 | 0.277 |
| | Dry µ | Index | 100 | 100 | 102 | 103 | 103 | 104 | 103 |
| | wet µ | Index | 100 | 98 | 103 | 102 | 101 | 104 | 103 |
| | Wear resistance | Index | 100 | 99 | 100 | 100 | 101 | 101 | 101 |

| | | | | | | | | | |
|---|---|---|---|---|---|---|---|---|---|
| ^{∗}1 Natural rubber: glass transition temperature (Tg) = -73°C *2 Synthetic rubber 1: modified styrene-butadiene copolymer rubber synthesized by the following method, glass transition temperature (Tg) = -70°C | | | | | | | | | |

### <Manufacturing method of synthetic rubber 1>

A cyclohexane solution of 1,3-butadiene and a cyclohexane solution of styrene are added to a dried pressure-resistant 800 mL glass container which is subjected to nitrogen substitution so that the added amount of 1,3-butadiene becomes 67.5 g and the added amount of styrene becomes 7.5 g; 0.6 mmol of 2,2-di(tetrahydrofuryl)propane is added thereto; 0.8 mmol of n-butyllithium is added thereto; and polymerization is then conducted at 50°C for 1.5 hours. To the polymerization reaction system in which the polymerization conversion ratio in this case reaches approximately 100%, 0.72 mmol of N,N-bis(trimethylsilyl)-3-[diethoxy(methyl)silyl]propylamine is added as a modifier, and modification reaction is conducted at 50°C for 30 minutes. Thereafter, the reaction is stopped by adding 2 mL of a 5 mass% isopropanol solution of 2,6-di-t-butyl-p-cresol (BHT), and drying is conducted according to an ordinal method to obtain a modified styrene-butadiene copolymer rubber.
*3 Synthetic rubber 2: modified polybutadiene rubber synthesized by the following method, glass transition temperature (Tg) = -110°C

### <Manufacturing method of synthetic rubber 2>

### (i) Preparation of catalyst

In a 100-mililiter grass bottle with a rubber plug which is dried and subjected to nitrogen substitution, 7.11 g of a cyclohexane solution of butadiene (15.2% by mass), 0.59 milliliters of a cyclohexane solution of neodymium neodecanoate (0.56 M), 10.32 milliliters of a toluene solution of methylaluminoxane MAO (PMAO manufactured by Tosoh Akzo Corporation) (3.23 M in terms of aluminum concentration), 7.77 milliliters of a hexane solution of diisobutylaluminum hydride (Kanto Chemical Co., Inc.) (0.90 M) are poured in this order followed by aging at room temperature for 2 minutes; and 1.45 milliliters of a hexane solution of diethylaluminum chloride (Kanto Chemical Co., Inc.) (0.95 M) is then added thereto followed by aging at room temperature for 15 minutes while occasionally being stirred. The neodymium concentration in the catalyst solution obtained in this manner is 0.011 M (mol/litter).

### (ii) Manufacturing of modified diene-based rubber with active terminal modified

A 900-milliliter grass bottle with a rubber plug is dried and subjected to nitrogen substitution, a cyclohexane solution of dried and purified butadiene and dried cyclohexane are each poured therein to achieve a state where 400 g of a cyclohexane solution of 12.5% by mass of butadiene is poured in. Thereafter, 2.28 milliliters (0.025 mmol in terms of neodymium) of the catalyst solution prepared as described above is poured therein followed by polymerization for 1.0 hour in a water bath at 50°C.

### (iii) Primary modification treatment

As a primary modifier, 23.5 (molar equivalent compared with neodymium) of 3-glycidoxypropyltrimethoxysilane is poured in as a hexane solution (1.0 M), and treatment is conducted at 50°C for 60 minutes.

### (iv) Subsequent treatment

Subsequently, after adding 1.2 milliliters of sorbitan trioleic acid ester singly as a carboxylic acid ester of a polyhydric alcohol and further conducting modification reaction at 50°C for 1 hour, 2 milliliters of a 5% isopropanol solution of an age resistor of 2,2'-methylene-bis(4-ethyl-6-t-butylphenol) (NS-5) is added thereto to terminate the reaction. Reprecipitation is further conducted in isopropanol containing a small amount of NS-5 followed by drum drying to obtain a modified polybutadiene rubber whose active terminals are modified.
*4 Synthetic rubber 3: styrene-butadiene copolymer rubber manufactured by JSR CORPORATION, bound styrene content: 40%, glass transition temperature (Tg) = -25°C
*5 Carbon black: trade name of "Asahi #78" manufactured by Asahi Carbon Co., Ltd.
*6 Silica: trade name of "Nipsil AQ" manufactured by Tosoh Silica Corporation
*7 Silane coupling agent: bis(3-triethoxysilylpropyl) disulfide, (average sulfur chain length: 2.35), trade name of "Si75^{®} (Si75 is a registered trademark in Japan, other countries, or both)" manufactured by Evonik Industries AG
*8 Wax: microcrystalline wax, trade name "OZOACE 0701" manufactured by Nippon Seiro Co., Ltd.
*9 Age resistor 6PPD: N-(1,3-dimethylbutyl)-N'-phenyl-p-phenylenediamine, trade name of "NOCRAC 6C" manufactured by Ouchi Shinko Chemical Industrial Co., Ltd.
^{∗}10 Age resistor TMQ: 2,2,4-trimethyl-1,2-dihydroquinoline polymer, trade name of "NONFLEX RD-S" manufactured by Seiko-Chemical Co., Ltd.
^{∗}11 Vulcanization accelerator DPG: 1,3-diphenylguanidine, trade name of "NOCCELER^{®} (NOCCELER is a registered trademark in Japan, other countries, or both) D" manufactured by Ouchi Shinko Chemical Industrial Co., Ltd.
^{∗}12 Vulcanization accelerator MBTS: di-2-benzothiazolyldisulfide, trade name of "NOCCELER^{®} DM-P" manufactured by Ouchi Shinko Chemical Industrial Co., Ltd.
^{∗}13 Vulcanization accelerator CBS: N-cyclohexyl-2-benzothiazolylsulfenamide, trade name of "NOCCELER^{®} CZ-G" manufactured by Ouchi Shinko Chemical Industrial Co., Ltd.
^{∗}14 C₉-based resin: a thermoplastic resin containing an aromatic monomer, trade name of "Nisseki Neopolymer^{®} (Nisseki Neopolymer is a registered trademark in Japan, other countries, or both) 140" manufactured by JX NIPPON OIL & ENERGY CORPORATION, softening point = 145°C
^{∗}15 α-Methylstyrene-based resin: a thermoplastic resin containing an aromatic monomer, trade name of "FTR0120" manufactured by Mitsui Chemicals Co., Ltd., softening point = 120°C
^{∗}16 Cs-based resin: a thermoplastic resin containing no aromatic monomer, trade name of "Escorez^{®} (Escorez is a registered trademark in Japan, other countries, or both) 1102B" manufactured by ExxonMobil Chemical Company, softening point = 100°C
^{∗}17 C₅/C₉-based resin: a thermoplastic resin containing an aromatic monomer, trade name of "T-REZ RD104" manufactured by Tonen Chemical Corporation, softening point = 104°C

It is found from Table 1 that by applying the rubber compositions of Examples according to the present disclosure to a tire, both dry performance and wet performance can be achieved at the same time without deteriorating the low loss property of the tire.

### INDUSTRIAL APPLICABILITY

The rubber composition of the present disclosure is available for a tread rubber of a tire. In addition, the tire of the present disclosure is available for tires for various types of vehicles.

## Claims

1. A rubber composition comprising: a rubber component (A) including a natural rubber (A1), a synthetic rubber (A2) having a glass transition temperature (Tg) of -50°C or less, and a synthetic rubber (A3) having a glass transition temperature (Tg) of more than -50°C; and
a thermoplastic resin (B) containing an aromatic monomer, wherein
a content of the natural rubber (A1) in the rubber component (A) is 40% by mass or more,
a bound styrene content in the synthetic rubber (A3) having a glass transition temperature (Tg) of more than -50°C is 40% by mass or more, and
a content of the thermoplastic resin (B) containing an aromatic monomer is 10 to 50 parts by mass based on 100 parts by mass of the rubber component (A).

2. The rubber composition according to claim 1, wherein a bound styrene content in the synthetic rubber (A2) having a glass transition temperature (Tg) of -50°C or less is 10% by mass or less.

3. The rubber composition according to claim 1 or 2, wherein a softening point of the thermoplastic resin (B) containing an aromatic monomer is 100°C or more.

4. The rubber composition according to any one of claims 1 to 3, wherein the thermoplastic resin (B) containing an aromatic monomer is at least one selected from the group consisting of a C₉-based resin, an α-methylstyrene-based resin, and a C₅/C₉-based resin.

5. A tire using the rubber composition according to any one of claims 1 to 4 for a tread rubber.

## Patentansprüche

1. Kautschukzusammensetzung, die Folgendes umfasst: eine Kautschukkomponente (A), die einen Naturkautschuk (A1), einen Synthesekautschuk (A2), der eine Glasübergangstemperatur (Tg) von -50 °C oder weniger aufweist, und einen Synthesekautschuk (A3), der eine Glasübergangstemperatur (Tg) von mehr als -50 °C aufweist, einschließt; und
ein thermoplastisches Harz (B), das ein aromatisches Monomer enthält, wobei
ein Gehalt des Naturkautschuks (A1) in der Kautschukkomponente (A) 40 Masse-% oder mehr beträgt,
ein Gehalt an gebundenem Styrol in dem Synthesekautschuk (A3), der eine Glasübergangstemperatur (Tg) von mehr als -50 °C aufweist, 40 Masse-% oder mehr beträgt, und
ein Gehalt des thermoplastischen Harzes (B), das ein aromatisches Monomer enthält, 10 bis 50 Massenanteile auf Grundlage von 100 Massenanteilen der Kautschukkomponente (A) beträgt.

2. Kautschukzusammensetzung nach Anspruch 1, wobei ein Gehalt an gebundenem Styrol in dem Synthesekautschuk (A2), der eine Glasübergangstemperatur (Tg) von -50 °C oder weniger aufweist, 10 Masse-% oder weniger beträgt.

3. Kautschukzusammensetzung nach Anspruch 1 oder 2, wobei ein Erweichungspunkt des thermoplastischen Harzes (B), das ein aromatisches Monomer enthält, 100 °C oder mehr beträgt.

4. Kautschukzusammensetzung nach einem der Ansprüche 1 bis 3, wobei das thermoplastische Harz (B), das ein aromatisches Monomer enthält, mindestens eines ist, das ausgewählt ist aus der Gruppe, die aus einem C₉-basierten Harz, einem α-methylstyrolbasierten Harz und einem C₅/C₉-basierten Harz besteht.

5. Reifen, der die Kautschukzusammensetzung nach einem der Ansprüche 1 bis 4 für einen Laufflächengummi verwendet.

## Revendications

1. Composition de caoutchouc, comprenant : un composant de caoutchouc (A) incluant un caoutchouc naturel (A1), un caoutchouc synthétique (A2) ayant une température de transition vitreuse (Tg) de -50 °C ou moins, et un caoutchouc synthétique (A3) ayant une température de transition vitreuse (Tg) supérieure à -50 °C ; et
une résine thermoplastique (B) contenant un monomère aromatique, dans laquelle :
une teneur en caoutchouc naturel (A1) dans le composant de caoutchouc (A) représente 40 % en masse ou plus ;
une teneur en styrène lié dans le caoutchouc synthétique (A3) ayant une température de transition vitreuse (Tg) supérieure à -50 °C représente 40 % en masse ou plus ; et
une teneur en résine thermoplastique (B) contenant un monomère aromatique est de 10 à 50 parties en masse sur la base de 100 parties en masse du composant de caoutchouc (A).

2. Composition de caoutchouc selon la revendication 1, dans laquelle une teneur en styrène lié dans le caoutchouc synthétique (A2) ayant une température de transition vitreuse (Tg) de -50 °C ou moins représente 10 % en masse ou moins.

3. Composition de caoutchouc selon la revendication 1 ou la revendication 2, dans laquelle un point de ramollissement de la résine thermoplastique (B) contenant un monomère aromatique correspond à 100 °C ou plus.

4. Composition de caoutchouc selon l'une quelconque des revendications 1 à 3, dans laquelle la résine thermoplastique (B) contenant un monomère aromatique est au moins une résine sélectionnée dans le groupe constitué d'une résine à base de C₉, d'une résine à base de α-méthylstyrène, et d'une résine à base de C₅/C₉.

5. Pneumatique utilisant la composition de caoutchouc selon l'une quelconque des revendications 1 à 4 pour une gomme de bande de roulement.
